# FASCICULE DE BREVET EUROPEEN

(11) **EP 4 254 102 B1**
(45) Date de publication et mention de la délivrance du brevet: **10.12.2025**
(21) Numéro de dépôt: 23164561.5
(22) Date de dépôt: 28.03.2023
(51) Int. Cl.: G05B 19/418

(54) **MODULE DE CONVOYAGE REVERSIBLE**
UMKEHRBARES FÖRDERMODUL
REVERSIBLE CONVEYOR MODULE

(30) Priorité: 30.03.2022 FR 2202847
(43) Date de publication de la demande: 04.10.2023
(73) Titulaire: HOLDING CIUCH, 59200 Tourcoing (FR)
(72) Inventeur: CORRE, Mathieu, 59200 Tourcoing (FR); CIUCH, Francis, 59890 Quesnoy sur Deule (FR); LAMBRECHTS, Fabien, 59166 Bousbecque (FR)
(74) Mandataire: Matkowska, Franck

(56) Documents cités:
- EP-A1- 0 619 247
- US-A1- 2018 288 512

## Description

### Domaine technique

La présente invention concerne le domaine du convoyage de charges, et notamment d'objets. Dans ce domaine, elle concerne plus particulièrement un module de convoyage comportant un convoyeur et un câblage électrique qui permet de rendre le module de convoyage réversible.

### Art antérieur

Dans le domaine de la transitique, il est connu de concevoir des lignes de convoyage automatisées et modulaires, qui sont réalisées au moyen de plusieurs modules de convoyage interconnectés.

Chaque module de convoyage comporte au moins un convoyeur comprenant des moyens de convoyage motorisés adaptés notamment au type de charge à transporter. Ces moyens de convoyage motorisés comportent par exemple un ensemble de rouleaux parallèles et espacés, un ensemble de galets, un ensemble de chaînes sans fin parallèles et espacées, une bande de transport sans fin, etc.

EP 0 619 247 A1 divulgue un tel module de convoyage.

Un module de convoyage peut être un simple convoyeur droit ou courbe. Un module de convoyage peut également comporter deux convoyeurs transversaux et imbriqués, dont l'un au moins peut avoir un mouvement monte et baisse, afin de permettre un transfert de charge avec un changement de direction à 90°, tel que par exemple dans les demandes de brevet WO2014/152614 et EP 3 789 322.

Un module de convoyage peut également comporter un convoyeur, qui peut être déplacé verticalement, afin de réaliser une fonction supplémentaire de transfert vertical d'une charge transportée sur le convoyeur.

Les modules de convoyages peuvent par exemple être installés bout à bout pour former une ligne de convoyage plus ou moins complexe, qui peut être en tout ou partie droite ou courbe et qui peut comporter des zones d'aiguillage, par exemple en Y, ou des zones d'accumulation ou zones tampons.

De manière connue, un module de convoyage comporte un câblage électrique au moins pour son alimentation en énergie électrique, qui est généralement réalisé en usine lors de la fabrication du module de convoyage. Ce câblage électrique permet sa connexion électrique avec d'autres modules de convoyage ou sa connexion électrique avec une armoire électrique raccordée au réseau électrique. A cet effet, il comporte à une extrémité, dite alimentée, des connecteurs électriques qui, pour des raisons de sécurité électrique, sont de type femelle, et comporte à son autre extrémité des connecteurs électriques de type mâle. Chaque connecteur électrique mâle permet ainsi de raccorder électriquement le module de convoyage, sur l'un de ses côtés, avec un connecteur électrique femelle alimenté d'un autre module de convoyage adjacent ou avec un connecteur électrique femelle alimenté d'une armoire électrique et chaque connecteur électrique femelle alimenté d'un module de convoyage permet de raccorder électriquement le module de convoyage, sur un autre côté, avec un connecteur électrique mâle d'un autre module de convoyage adjacent.

Par ailleurs, dans certains cas, en particulier lorsque la ligne de convoyage est pilotée automatiquement au moyen d'une informatique distribuée, les modules de convoyage doivent également pouvoir communiquer entre eux, notamment de proche en proche, au travers d'un réseau de communication local adapté de type LAN.

### Objectif de l'invention

La présente invention propose un module de convoyage qui est plus simple à implanter dans une ligne de convoyage et qui facilite la conception d'une ligne de convoyage et réduit les contraintes liées à l'orientation des convoyeurs des modules de convoyage.

### Résumé de l'invention

L'invention a ainsi pour objet principal un module de convoyage comportant au moins un convoyeur, qui est apte à transporter au moins une charge entre un premier côté du convoyeur et un deuxième côté du convoyeur, et un câblage électrique qui comprend un bus électrique comportant une pluralité de lignes conductrices, qui sont isolées électriquement les unes des autres et qui s'étendent au moins entre le premier côté et le deuxième côté du convoyeur ; chaque ligne conductrice comporte à chaque extrémité un connecteur électrique hermaphrodite et pour chaque ligne conductrice, les deux connecteurs électriques hermaphrodites d'une ligne conductrice sont identiques, de sorte que le module de convoyage est réversible.

Par connecteur électrique « hermaphrodite » on désigne tout connecteur électrique non-genré qui peut être couplé à un connecteur hermaphrodite identique pour réaliser un raccordement électrique entre deux conducteurs.

De manière facultative, le module de convoyage peut comporter la ou les caractéristiques techniques optionnelles ci-après, prises isolément ou en combinaison l'une avec l'autre :
- Le bus électrique comporte au moins un câble électrique comprenant au moins deux fils conducteurs, lesquels fils conducteurs sont isolés électriquement les uns des autres et s'étendent au moins entre le premier côté et le deuxième côté du convoyeur, chaque fil conducteur comportant à chaque extrémité un connecteur électrique hermaphrodite et pour chaque fil conducteur, les deux connecteurs électriques hermaphrodites d'un fil conducteur étant identiques.
- tous les connecteurs hermaphrodites du câble électrique susvisé peuvent avantageusement, mais non nécessairement, être identiques.
- Le bus électrique comporte au moins un bus d'alimentation électrique adapté pour l'alimentation électrique du module de convoyage avec un courant alternatif, de préférence un courant alternatif triphasé et/ou avec un courant continu.
- Le bus d'alimentation électrique comporte un câble d'alimentation électrique comprenant au moins cinq fils conducteurs pour l'alimentation électrique du module de convoyage avec un courant alternatif triphasé, lesquels fils conducteurs sont isolés électriquement les uns des autres et s'étendent au moins entre le premier côté et deuxième côté du convoyeur ; chaque fil conducteur comporte à chaque extrémité un connecteur électrique hermaphrodite et pour chaque fil conducteur, les deux connecteurs électriques hermaphrodites d'un fil conducteur sont identiques.
- Le bus d'alimentation électrique comporte un câble d'alimentation électrique comprenant au moins deux fils conducteurs pour l'alimentation électrique du module de convoyage avec un courant continu, lesquels fils conducteurs sont isolés électriquement les uns des autres et s'étendent au moins entre le premier côté et le deuxième côté du convoyeur ; chaque fil conducteur comporte à chaque extrémité un connecteur électrique hermaphrodite et pour chaque fil conducteur, les deux connecteurs électriques hermaphrodites d'un fil conducteur sont identiques.
- Tous les connecteurs hermaphrodites du bus d'alimentation électrique sont identiques.
- Le module de convoyage comporte au moins une dérivation, qui raccorde électriquement plusieurs lignes conductrices du bus d'alimentation électrique à un ou plusieurs actionneurs du convoyeur, et de préférence à un ou plusieurs moteurs électriques du convoyeur ; ladite dérivation comporte de préférence une prise vampire.
- Le module de convoyage comporte un contrôleur qui est adapté pour commander le convoyeur et au moins deux lignes conductrices du bus d'alimentation électrique sont raccordées par une dérivation, au contrôleur, afin de l'alimenter en courant électrique ; ladite dérivation comporte de préférence une prise vampire.
- Le module de convoyage comporte un contrôleur qui est adapté pour commander le convoyeur ; le bus électrique comporte un bus de communication qui s'étend au moins entre le premier côté et le deuxième côté du convoyeur, et qui comporte à chaque extrémité un connecteur électrique hermaphrodite ; les deux connecteurs électriques hermaphrodites du bus de communication sont identiques, et le contrôleur est connecté au bus de communication.
- Le bus de communication est un bus réseau de type Ethernet.
- Le bus de communication comporte un premier câble réseau , dont une extrémité est pourvue de l'un des connecteurs électriques hermaphrodites et dont l'autre extrémité est connectée au contrôleur et un deuxième câble réseau dont une extrémité est pourvue de l'autre connecteur électrique hermaphrodite, et dont l'autre extrémité est connectée au contrôleur.
- Le bus électrique comporte un bus de sécurité pour arrêt d'urgence comprenant plusieurs lignes conductrices (qui sont isolées électriquement les unes des autres et qui s'étendent au moins entre le premier côté et le deuxième côté, chaque ligne conductrice comportant à chaque extrémité un connecteur électrique hermaphrodite et pour chaque ligne conductrice, les deux connecteurs électriques hermaphrodites d'une ligne conductrice étant identiques.
- Le module convoyage comporte un actionneur d'arrêt d'urgence manuel raccordé électriquement à au moins une partie des lignes conductrices.
- Le convoyeur comporte une motorisation bidirectionnelle et le module de convoyage comporte un contrôleur qui est adapté pour commander le convoyeur dans un premier sens de convoyage du premier côté (C1) du convoyeur vers le deuxième côté du convoyeur ou dans un sens de convoyage opposé du deuxième côté du convoyeur vers le premier côté du convoyeur.
- Le module de convoyage comporte au moins une zone de convoyage et comporte pour chaque zone de convoyage deux détecteurs de présence d'un objet transporté sur le convoyeur , qui sont espacés l'un de l'autre dans la direction de convoyage et sont proches l'un de l'autre et qui de préférence sont symétriques l'un de l'autre par rapport au centre e la zone de convoyage, et un contrôleur qui est adapté pour commander le convoyeur à partir de chaque signal électrique de détection délivré par chaque détecteur.
- Le convoyeur comporte un ensemble de convoyage motorisé comportant plusieurs rouleaux parallèles et espacés dans la direction de convoyage.
- Au moins un des rouleaux est motorisé et est couplé aux autres rouleaux pour leur entraînement en rotation par un système de transmission, de préférence par système de transmission comportant une courroie de transmission.
- Le rouleau moteur est positionné au voisinage du centre de l'ensemble de rouleaux auxquels il est couplé.

L'invention a également pour objet une ligne de convoyage comportant plusieurs modules de convoyage susvisés, dont les bus électriques sont interconnectés.

### Brève description des dessins

Les caractéristiques et avantages de l'invention apparaîtront plus clairement à la lecture de la description détaillée ci-après d'une variante préférée de réalisation de l'invention et en référence aux dessins annexés sur lesquels :
- La figure 1 représente de manière schématique un exemple de module de convoyage conforme à l'invention.
- La figure 2 est un schéma électrique du module de convoyage de la figure 1.
- La figure 3 montre un exemple particulier de réalisation du bus d'alimentation électrique du module de convoyage de la figure 1.
- La figure 4 est une représentation isométrique d'un exemple de connecteurs hermaphrodites.

### Description détaillée

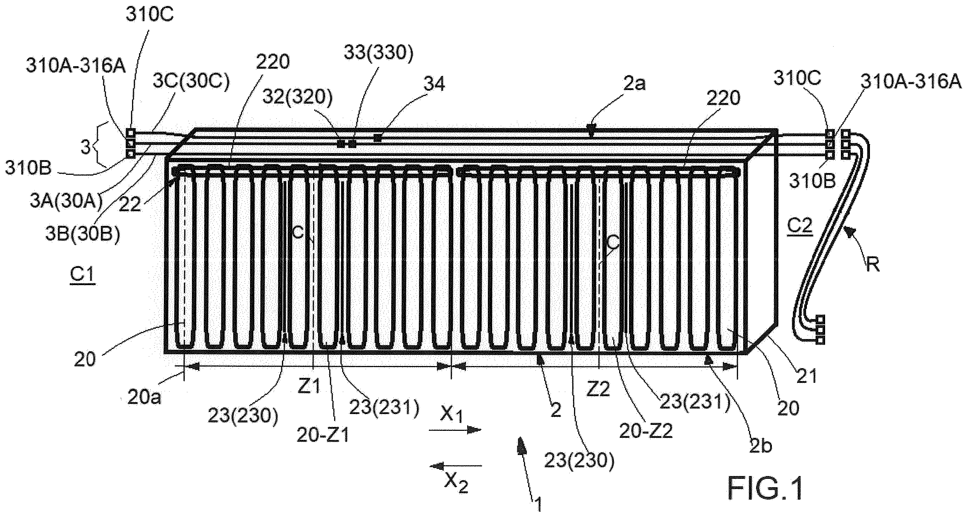

On a représenté de manière schématique sur la figure 1 un exemple de module de convoyage 1 comportant un convoyeur 2 et un câblage électrique 3 qui est conforme à l'invention.

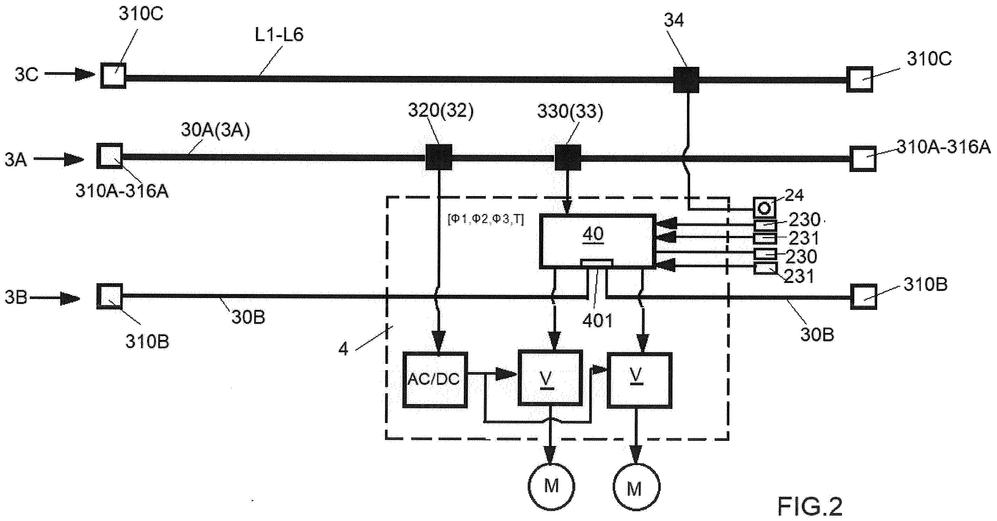

Le module de convoyage 1 comporte également (Figure 2) un contrôleur 4, qui est de préférence fixé au convoyeur 2 et qui d'une manière générale est adapté pour commander automatiquement le convoyeur 2.

### Convoyeur 2

Dans cet exemple particulier, le convoyeur 2 est un convoyeur droit à rouleaux. L'invention n'est pas limitée à ce type particulier de convoyeur, mais peut être mise en œuvre avec tout type connu de convoyeur droit ou courbe et pouvant comporter d'autres moyens de convoyage, tels que par exemple et de manière non exhaustive un convoyeur à chaînes, un convoyeur à galets, un convoyeur à bande de transport.

Dans cet exemple particulier, le convoyeur 2 du module de convoyage 1 comporte un ensemble de plusieurs rouleaux 20 qui sont montés sur un châssis 21 en étant parallèles et espacés dans la direction de convoyage. Lorsque le module de convoyage est implanté dans une ligne de convoyage, les axes de rotation 20a des rouleaux 20 sont généralement horizontaux et les rouleaux 20 permettent de supporter et transporter une charge entre un premier côté C1 du convoyeur 2 et un deuxième côté C2 du convoyeur 2.

La charge peut par exemple et de manière non exhaustive être un objet de type bac ou container rigide, vide ou rempli, un carton vide ou rempli, un colis, une palette vide ou chargée de produits, ...

Dans cet exemple particulier et non limitatif de l'invention, ces rouleaux 20 sont divisés en deux zones de convoyage Z1 et Z2 successives. Le rouleau 20-Z1 et 20-Z2 de chaque zone Z1 et Z2 est un rouleau moteur, qui de manière connue est motorisé au moyen d'un moteur logé dans le rouleau.

Dans une autre variante, le convoyeur 1 peut comporter une seule zone ou peut comporter trois zones ou plus.

Chaque rouleau motorisé 20-Z1 et 20-Z2 est couplé aux autres rouleaux 20 de la zone Z1, Z2 correspondante par des moyens de transmission 22, qui dans l'exemple illustré comportent des courroies de transmission 220 positionnées, de manière excentrée, à une extrémité de l'axe des rouleaux 20.

Chaque rouleau moteur 20-Z1, 20-Z2 est de préférence positionné dans la direction de convoyage au voisinage du centre C de la zone de convoyage Z1, Z2 correspondante. Cette position sensiblement centrale des rouleaux 20-Z1, 20-Z2 est une position optimale, mais non impérative. Elle permet d'améliorer l'entraînement des autres rouleaux 20 et notamment de réduire les problèmes pouvant découler d'un glissement des courroies de transmission 220, en particulier lorsque les courroies de transmission 220 sont lisses et non crantées.

Le moteur de chaque rouleau central 20-Z1, 20-Z2 est de préférence bidirectionnel, de sorte que le convoyeur 2 est bidirectionnel et permet de transporter dans la direction de convoyage une charge supportée par les rouleaux 20 entre un premier côté C1 du convoyeur 2 et un deuxième côte C2 du convoyeur dans un sens de convoyage X1 ou dans le sens de convoyage opposé X2.

Bien que la mise en œuvre d'un convoyeur bidirectionnel soit préférentielle, l'invention peut néanmoins être mise en œuvre également avec un convoyeur monodirectionnel.

Le convoyeur 2 du module de convoyage 1 comporte également des moyens de détection 23, qui permettent de détecter la présence d'un objet sur les rouleaux 20 du convoyeur 2.

Ces moyens de détection 23 sont de préférence des détecteurs sans contact, par exemple de type photodiodes.

De préférence, ces moyens de détection 23 comportent, pour chaque zone Z1 et Z2, deux détecteurs 230 et 231, qui sont espacés l'un de l'autre dans la direction de convoyage.

Les signaux de détection délivrés par les détecteurs 230 et 231 sont envoyés au contrôleur 4.

Les deux détecteurs 230 et 231 de chaque zone de convoyage Z1, Z2 sont proches l'un de l'autre, de telle sorte qu'ils sont aptes à détecter simultanément la présence d'un objet transporté sur le convoyeur. En d'autres termes, l'espacement dans la direction de convoyage entre les deux détecteurs 230 et 231 d'une zone de convoyage Z1, Z2 est inférieure aux dimensions d'un objet transporté. Cette proximité entre les deux détecteurs de présence 230 et 231 dans la direction de convoyage permet au contrôleur 4 de commander le convoyeur 2, à partir des signaux de détection délivrés par les détecteurs 230 et 231, de manière transporter un objet jusqu'à une position d'arrêt, qui peut être contrôlée automatiquement avec précision et dans laquelle l'objet peut être immobilisé en étant centré dans la direction de convoyage par rapport au deux détecteurs 230, 231.

De préférence, les deux détecteurs 230 et 231 d'une zone de convoyage Z1, Z2 sont symétriques l'un de l'autre par rapport au centre C de la zone de convoyage correspondance, ce qui permet d'avoir une position d'arrêt d'un objet au centre de la zone de convoyage.

De préférence, les détecteurs 230 et 231 sont intercalés entre deux rouleaux 20 et plus particulièrement sont constitués par exemple par deux barres de photodiodes.

### Contrôleur 4

Le contrôleur 4 est de préférence fixé châssis 21 du convoyeur 2 de manière amovible ou définitive.

Le contrôleur 4 est adapté dans cet exemple particulier pour commander les moteurs M (Figure 2) des rouleaux 20-Z1 et 20-Z2 dans un sens de rotation ou l'autre, via un variateur V associé à chaque moteur M.

Le contrôleur 4 peut être implémenté sous différentes formes, et peut par exemple comporter un contrôleur logique programmable 40 comprenant un microprocesseur ou microcontrôleur, ou comprenant un ou plusieurs circuits logiques de type FPGA, ou comprenant un circuit logique spécifique de type ASIC ou comprenant un automate programmable industriel (API).

Ce contrôleur logique programmable comporte au moins une mémoire électronique, par exemple de type RAM et/ou EEPROM, dans laquelle un programme peut être chargé de manière à programmer le fonctionnement du convoyeur 2.

### Câblage électrique 3

Le câblage électrique 3 du module de convoyage 1 est connecté au moins au convoyeur 2 et au contrôleur 4.

Ce câblage électrique 3 comporte un bus électrique, qui dans l'exemple particulier de réalisation des figures annexées est composé de trois bus 3A, 3B et 3C, qui s'étendent chacun au moins entre le premier côté C1 et le deuxième côté C2 du convoyeur 2, à savoir : un bus d'alimentation électrique 3A, un bus de communication 3B et un bus de sécurité 3C.

Dans cet exemple particulier, les trois bus électriques 3A, 3B et 3C sont fixés sur le châssis 21 du convoyeur 2 en étant positionnés de manière excentrée sur un des flancs 2a du convoyeur qui s'étend entre le premier côté C1 du convoyeur 2 et le deuxième côté C2 du convoyeur 2, et sont par exemple logés et fixés dans un profilé formant un longeron du châssis 21 du convoyeur 2.

Ce câblage électrique 3 peut avantageusement être réalisé en usine lors de la fabrication du module de convoyage 1.

### Bus d'alimentation électrique 3A

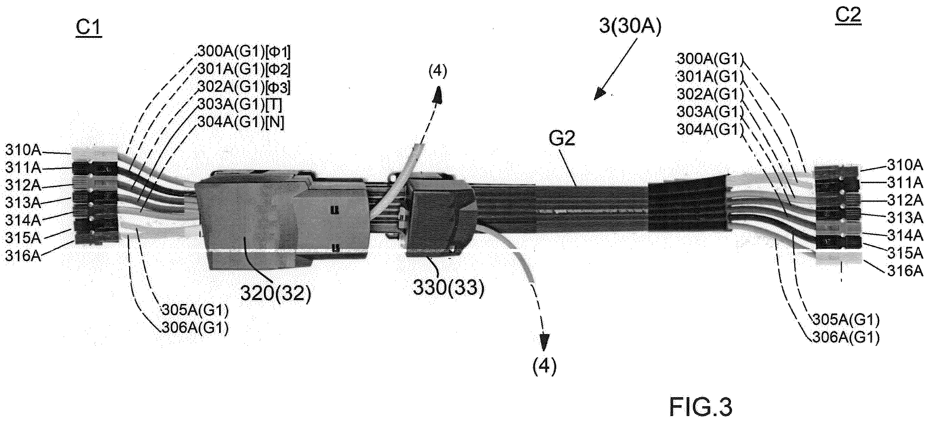

En référence aux figures 1 et 3, le bus d'alimentation électrique 3A est réalisé sous la forme d'un premier câble d'alimentation électrique 30A comportant plusieurs fils conducteurs 300A à 306A, qui sont isolés électriquement les uns des autres en étant chacune entourés d'une gaine d'isolation électrique G1. Dans cet exemple particulier, le câble d'alimentation électrique 30A comporte de manière optionnelle une gaine de protection mécanique G2 additionnelle.

Chaque fil conducteur 300A à 306A s'étend sans interruption au moins entre le premier côté C1 et le deuxième côté C2 du convoyeur 2 et constitue une ligne du bus d'alimentation électrique 3A.

Plus particulièrement, un premier groupe de cinq fils conducteurs 300A à 304A permet de transporter un courant fort alternatif triphasé : les trois phases (ϕ1, ϕ2, ϕ3) du courant fort alternatif triphasé sont transportées respectivement par les fils conducteurs 300A à 302A ; le fil conducteur 303A est un fil de mise à la terre(T) et le fil conducteur 304A correspond au neutre (N) du courant triphasé.

A titre d'exemple non limitatif, la tension entre deux phases (ϕ1/ϕ2, ϕ1/ϕ3, ϕ2/ϕ3) du courant alternatif est par exemple 380V et la tension entre chaque phase (ϕ1, ϕ2, ϕ3) et le neutre (N) est par exemple 230V.

Un deuxième groupe de deux fils conducteurs 305A et 306A permet de transporter un courant fort continu, par exemple et de manière non limitative un courant continu 24V.

Les deux extrémités de chaque fil conducteur 300A à 306A qui sont au voisinage respectivement des deux côtés C1 et C2 du convoyeur sont dénudées et chaque extrémité dénudée de chaque fil conducteur 300A à 306A est insérée et fixé dans un connecteur électrique 310A à 316A.

Tous les connecteurs électriques 310A à 316A sont hermaphrodites et pour chaque fil conducteur 300A à 306A, les deux connecteurs électriques (par exemple 310A) d'un même fil conducteur (par exemple 300A) sont identiques.

De préférence, mais non nécessairement, tous les connecteurs 310A à 316A hermaphrodites sont identiques.

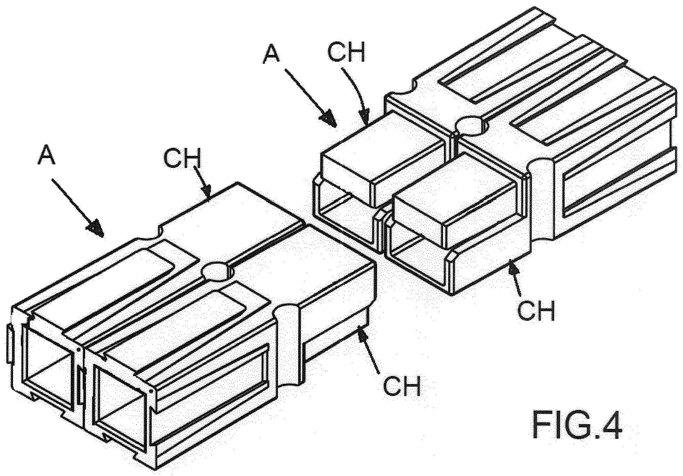

On a représenté sur la figure 4, un exemple de connecteur hermaphrodite CH connu par ailleurs et pouvant être utilisé en guise de connecteur 310A à 316A. Sur cette figure 4, on a représenté deux paires A identiques et interconnectables de deux connecteurs électriques hermaphrodites CH, les deux connecteurs électriques hermaphrodites CH de chaque paire A étant soudés ou collés entre eux.

Il convient de souligner que l'invention n'est pas limitée à la structure particulière de connecteur hermaphrodite CH de la figure 4, mais peut être réalisée avec tout connecteur électrique hermaphrodite connu, i.e. non-genré, l'important étant que les deux connecteurs électriques hermaphrodites aux deux extrémités d'un même fil conducteur soient identiques.

Les connecteurs hermaphrodites 310A à 316A permettent d'interconnecter électriquement le bus d'alimentation électrique 3A avec un bus d'alimentation électrique d'un deuxième module de convoyage, dont le convoyeur est adjacent au premier coté C1 du convoyeur 2 et avec un bus d'alimentation électrique d'un troisième module de convoyage, dont le convoyeur est adjacent au deuxième coté C2 du convoyeur 2 ou de connecter directement le bus d'alimentation électrique 3A avec une armoire électrique raccordée au réseau électrique et également pourvue de connecteurs hermaphrodites au lieu de connecteurs électriques traditionnels de type femelle.

En référence à la figure 2, les fils conducteur 300A à 303A (ϕ1, ϕ2, ϕ3 ; T) du bus d'alimentation électrique 3A sont connectés électriquement à un convertisseur AC/DC de courant alternatif en courant continu du contrôleur 4, au moyen d'une dérivation 32. La sortie en courant du convertisseur AC/DC est connectée en parallèle à deux variateurs V, qui permettent d'alimenter chacun l'un des moteurs M du convoyeur 2 avec un courant modulé par hachage. Chaque variateur V est commandé automatiquement par le contrôleur logique programmable 40 pour obtenir l'arrêt ou la mise en rotation des deux rouleaux moteurs 20-Z1 t 20-Z2 du convoyeur 2 dans un sens de rotation donné, avec une régulation de leur vitesse de rotation et de leur couple moteur.

Cette dérivation 32 peut être réalisée au moyen d'un simple bornier de dérivation. De préférence, cette dérivation est réalisée au moyen d'une prise vampire 320 (Figure 2), qui de manière connue en soi permet un raccordement électrique simple et rapide, à n'importe quelle position du bus d'alimentation électrique 3A, par perçage et connexion à travers les gaines G1 et G2 entourant les fils conducteurs 300A à 306A.

En référence aux figures 2 et 3, les fils conducteur 305A et 306A du bus d'alimentation électrique 3A sont connectés électriquement au contrôleur logique programmable 40 au moyen d'une dérivation 33, afin d'en assurer son alimentation électrique en courant continu.

Cette dérivation 33 peut être réalisée au moyen d'un simple bornier de dérivation. De préférence, cette dérivation est réalisée au moyen d'une prise vampire 330 (Figure 3).

Lorsque le convoyeur comporte au moins un actionneur autre que les moteurs M susvisés, tel que par exemple un vérin électrique permettant de déplacer une paroi de déviation des produits transportés, le bus d'alimentation électrique 3A peut également être utilisé pour alimenter cet actionneur

La mise en œuvre de connecteurs électriques 310A à 316A qui sont hermaphrodites permet de rendre le module de convoyage 2 réversible et présente ainsi plusieurs avantages.

En fonction des contraintes mécaniques d'implantation du convoyeur, le convoyeur 2 du module de convoyage 1 réversible peut avantageusement être implanté dans une ligne de convoyage en étant orienté indifféremment dans un sens (premier coté C1 à gauche et deuxième coté C2 à droite) ou au contraire être inversé à 180° dans le sens opposé (premier coté C1 à droite et deuxième coté C2 à gauche), sans que cela pose un problème de connexion électrique du bus d'alimentation électrique.

Au surplus, lorsque le bus d'alimentation électrique 3A du module de convoyage doit être connecté avec le bus d'alimentation électrique d'un deuxième module de convoyage, dont le convoyeur est adjacent au premier coté C1 du convoyeur 2 et/ou avec le bus d'alimentation électrique d'un troisième module de convoyage, dont le convoyeur est adjacent au deuxième coté C2 du convoyeur 2, grâce au caractère hermaphrodite des connecteurs 310A à 316A, le bus d'alimentation du deuxième convoyeur et le bus d'alimentation du troisième convoyeur peuvent indifféremment être alimentés ou non en courant fort (alternatif et continu) en étant raccordé ou non à un réseau d'alimentation électrique.

De même, le bus d'alimentation électrique 3A du module de convoyage 1 peut être connecté en toute sécurité avec une armoire d'alimentation électrique, indifféremment au moyen des connecteurs hermaphrodites du bus d'alimentation qui sont au voisinage du premier coté C1 du convoyeur 2 ou des connecteurs hermaphrodites du bus d'alimentation qui sont à l'opposé au voisinage du deuxième coté C2 du convoyeur 2.

Il résulte de ce qui précède que la réversibilité de ce module de convoyage 1 facilite avantageusement son implantation dans une ligne de convoyage et simplifie la conception de la ligne de convoyage, en réduisant les contraintes liées à l'orientation des convoyeurs des modules convoyage. On réduit également avantageusement le nombre de références nécessaires pour un même type de module de convoyage.

### Bus de communication 3B

En référence à la figure 2, le bus de communication 3B comporte deux câbles électriques réseau 30B, et par exemple deux câbles Ethernet.

Chaque câble réseau 30B comporte à une extrémité un connecteur électrique hermaphrodite 310B au voisinage (Figure 1) respectivement des deux côtés C1 et C2 du convoyeur 2 et à son extrémité opposée (Figure 2) est connecté électriquement à un port réseau 401 du contrôleur logique programmable 40.

Les deux câbles réseau 30B forment ainsi une ligne conductrice du bus de communication, qui s'étend au moins entre les deux côtés C1 et C2 du convoyeur 2, et qui est isolée électriquement des autres lignes conductrices des bus 3A et 3C.

Un connecteur électrique hermaphrodite 310B peut par exemple, mais pas exclusivement, être un connecteur du type de celui CH de la figure 4, l'important étant que les deux connecteurs électriques hermaphrodites 310B des deux câbles réseau 30B soient identiques.

Les deux connecteurs hermaphrodites 310B permettent de connecter le bus de communication 3B du module de convoyage 1 avec le bus de communication d'un deuxième module de convoyage, dont le convoyeur est adjacent au premier coté C1 du convoyeur 2 et avec le bus de communication d'un troisième module de convoyage, dont le convoyeur est adjacent au deuxième coté C2 du convoyeur 2.

Les modules de convoyage peuvent ainsi communiquer entre eux en réseau, et par exemple en fonction du protocole de communication adapté, peuvent par exemple communiquer entre eux de proche en proche et/ou avec un système informatique de supervision connecté au réseau de communication formé par les modules de convoyage interconnectés.

De manière comparable à ce qui a été précédemment décrit pour le bus d'alimentation électrique 3A, la mise en œuvre de connecteurs hermaphrodites 310B permet avantageusement de rendre le module de convoyage réversible, ce qui facilite avantageusement son implantation dans une ligne de convoyage et simplifie la conception de la ligne de convoyage, On réduit également avantageusement le nombre de références nécessaires pour un même type de module de convoyage.

### Bus de sécurité 3C- implémentation des arrêts d'urgence

Dans cet exemple particulier, le bus de sécurité 3C comporte un câble électrique 30C comportant plusieurs lignes conductrices L1 à L6 (Figure 2) pour la transmission de courant faible, qui sont isolées électriquement les unes des autres. Chaque ligne conductrice L1 à L6 comporte à chaque extrémité un connecteur électrique hermaphrodite 310C et pour chaque ligne conductrice L1 à L6, les deux connecteurs électriques hermaphrodites 310C d'une même ligne conductrice sont identiques.

Les connecteurs hermaphrodites 310C permettent de connecter le bus de sécurité 3C du module de convoyage 1 avec le bus de sécurité d'un deuxième module de convoyage, dont le convoyeur est adjacent au premier coté C1 du convoyeur 2 et avec le bus de sécurité d'un troisième module de convoyage, dont le convoyeur est adjacent au deuxième coté C2 du convoyeur 2.

A titre d'exemple uniquement, deux lignes conductrices L1 et L2 peuvent traverser le module de convoyage sans être interrompues et sans être connectées électriquement au contrôleur 4, et sont utilisées par exemple pour transmettre un défaut détecté sur l'un des modules de convoyage interconnectés d'une ligne de convoyage. Les autres lignes L3 à L6 sont de manière usuelle et connues raccordées électriquement à un actionneur d'arrêt d'urgence manuel 24 du convoyeur 2 au moyen d'une dérivation 34 Adhoc.

De manière comparable à ce qui a été précédemment décrit pour le bus d'alimentation électrique 3A, la mise en œuvre de connecteurs hermaphrodites 310C permet avantageusement de rendre le module de convoyage 1 réversible, ce qui facilite avantageusement son implantation dans une ligne de convoyage et simplifie la conception de la ligne de convoyage. On réduit également avantageusement le nombre de références nécessaires pour un même type de module de convoyage.

### Rallonge R (optionnelle)

Si nécessaire, en fonction de l'orientation du convoyeur 1, on peut également être amené à utiliser (figure 1) une rallonge électrique R amovible, qui est pourvue à ses deux extrémités de connecteurs hermaphrodites permettant son raccordement aux trois bus 3A, 3B et 3C, indifféremment à une extrémité ou l'autre de ces bus 3A, 3B, 3C et qui permet de prolonger les trois bus 3A, 3C et 3C, à une extrémité ou l'autre, vers l'autre flanc 2b du convoyeur.

Dans une autre variante de réalisation, les bus 3A, 3B, 3C peuvent également être positionnés au centre du convoyeur 2, de sorte que l'utilisation d'une rallonge R peut être évitée.

L'invention n'est pas limitée à un module de convoyage comportant un unique convoyeur droit à rouleaux, mais s'étend à tout module de convoyage comportant au moins un convoyeur droit ou courbe, qui d'une manière générale est apte à transporter au moins une charge entre un premier côté du convoyeur et un deuxième côté du convoyeur.

Dans le cadre de l'invention, et de manière non exhaustive, un module de convoyage peut également être constitué par un dispositif transfert à 90° comportant de manière connue deux convoyeurs transversaux et imbriqués, dont l'un au moins peut avoir un mouvement monte et baisse, afin de permettre un transfert de charge avec un changement de direction à 90°. Dans ce cas particulier, les bus 3A, 3B, 3C associés à l'un des convoyeurs du module de convoyage sont dans ce cas-là raccordés électriquement respectivement avec les bus 3A, 3B, 3C associés à l'autre convoyeur du module de convoyage et le module de convoyage comporte ainsi les connecteurs hermaphrodites de chaque bus 3A, 3B, 3C sur chacun de ses quatre côtés.

Un module de convoyage peut également comporter un convoyeur, qui peut être déplacé dans son ensemble verticalement entre une position basse et une position haute afin de réaliser une fonction supplémentaire de transfert vertical d'une charge transportée.

## Revendications

1. Module de convoyage (1) comportant au moins un convoyeur (2), qui est apte à transporter au moins une charge entre un premier côté (C1) du convoyeur et un deuxième côté (C2) du convoyeur, et un câblage électrique (3) qui comprend un bus électrique comportant une pluralité de lignes conductrices, qui sont isolées électriquement les unes des autres et qui s'étendent au moins entre le premier côté (C1) et le deuxième côté (C2) du convoyeur,
**caractérisé en ce que** chaque ligne conductrice comporte à chaque extrémité un connecteur électrique hermaphrodite et **en ce que** pour chaque ligne conductrice, les deux connecteurs électriques hermaphrodites d'une ligne conductrice sont identiques, de sorte que le module de convoyage (1) est réversible.

2. Module de convoyage selon la revendication 1, dans lequel le bus électrique comporte au moins un bus d'alimentation électrique (3A) adapté pour l'alimentation électrique du module de convoyage (1) avec un courant alternatif, de préférence un courant alternatif triphasé et/ou avec un courant continu.

3. Module de convoyage selon la revendication 2, dans lequel le bus d'alimentation électrique (3A) comporte un câble d'alimentation électrique comprenant au moins cinq fils conducteurs (300A à 304A) pour l'alimentation électrique du module de convoyage avec un courant alternatif triphasé, lesquels fils conducteurs (300A à 304A) sont isolés électriquement les uns des autres et s'étendent au moins entre le premier côté (C1) et deuxième côté (C2) du convoyeur, chaque fil conducteur (300A à 304A) comportant à chaque extrémité un connecteur électrique hermaphrodite (310A à 314A) et pour chaque fil conducteur (300A à 304A), les deux connecteurs électriques hermaphrodites d'un fil conducteur étant identiques.

4. Module de convoyage selon la revendication 2 ou 3, dans lequel le bus d'alimentation électrique (3A) comporte un câble d'alimentation électrique comprenant au moins deux fils conducteurs (305A ; 306A) pour l'alimentation électrique du module de convoyage (1) avec un courant continu, lesquels fils conducteurs (305A ; 306A) sont isolés électriquement les uns des autres et s'étendent au moins entre le premier côté (C1) et le deuxième côté (C2) du convoyeur, chaque fil conducteur (305A ; 306A) comportant à chaque extrémité un connecteur électrique hermaphrodite (315A ; 316A) et pour chaque fil conducteur, les deux connecteurs électriques hermaphrodites d'un fil conducteur étant identiques.

5. Module selon l'une quelconque des revendications 2 à 4, dans lequel tous les connecteurs hermaphrodites du bus d'alimentation électrique (3A) sont identiques.

6. Module de convoyage selon l'une quelconque des revendications 2 à 5, comportant au moins une dérivation (32), qui raccorde électriquement plusieurs lignes conductrices du bus d'alimentation électrique (3A) à un ou plusieurs actionneurs du convoyeur, et de préférence à un ou plusieurs moteurs électriques (M) du convoyeur (2), et de préférence dans lequel la dérivation (32) comporte une prise vampire (320).

7. Module de convoyage selon l'une quelconque des revendications 2 à 6, comportant un contrôleur (4) qui est adapté pour commander le convoyeur (2) et dans lequel au moins deux lignes conductrices du bus d'alimentation électrique (3A) sont raccordées par une dérivation (33) au contrôleur (4), afin de l'alimenter en courant électrique, et de préférence dans lequel la dérivation (33) comporte une prise vampire (330).

8. Module de convoyage selon l'une quelconque des revendications 1 à 7, qui comporte un contrôleur (4) qui est adapté pour commander le convoyeur (2), et dans lequel le bus électrique comporte un bus de communication (3B) qui s'étend au moins entre le premier côté (C1) et le deuxième côté (C2) du convoyeur (2), et qui comporte à chaque extrémité un connecteur électrique hermaphrodite (310B), les deux connecteurs électriques hermaphrodites (310B) du bus de communication (3B) étant identiques, et le contrôleur (4) étant connecté au bus de communication (3B), le bus de communication (3B) étant de préférence un bus réseau de type Ethernet.

9. Module de convoyage selon la revendication 8, dans lequel le bus de communication (3B) comporte un premier câble réseau (30B), dont une extrémité est pourvue de l'un des connecteurs électriques hermaphrodites (310B) et dont l'autre extrémité est connectée au contrôleur (4) et un deuxième câble réseau (30B) dont une extrémité est pourvue de l'autre connecteur électrique hermaphrodite (310B), et dont l'autre extrémité est connectée au contrôleur (4).

10. Module de convoyage selon l'une quelconque des revendications 1 à 8, dans lequel le bus électrique comporte un bus de sécurité (3C) pour arrêt d'urgence comprenant plusieurs lignes conductrices (L1 à L6) qui sont isolées électriquement les unes des autres et qui s'étendent au moins entre le premier côté (C1) et le deuxième côté (C2), chaque ligne conductrice (L1 à L6) comportant à chaque extrémité un connecteur électrique hermaphrodite (310C) et pour chaque ligne conductrice (L1 à L6), les deux connecteurs électriques hermaphrodites (310C) d'une ligne conductrice étant identiques, et le module de convoyage comportant de préférence un actionneur d'arrêt d'urgence manuel (24) raccordé électriquement à au moins une partie (L3 à L6) des lignes conductrices.

11. Module de convoyage selon l'une quelconque des revendications 1 à 10, dans lequel le convoyeur (2) comporte une motorisation bidirectionnelle et le module de convoyage comporte un contrôleur (4) qui est adapté pour commander le convoyeur (2) dans un premier sens de convoyage (X1) du premier côté (C1) du convoyeur vers le deuxième côté (C2) du convoyeur ou dans un sens de convoyage opposé (X2) du deuxième côté (C2) du convoyeur vers le premier côté (C1) du convoyeur.

12. Module de convoyage selon l'une quelconque des revendications 1 à 11, comportant au moins une zone de convoyage (Z1 ; Z2) et comportant pour chaque zone de convoyage (Z1 ; Z2) deux détecteurs (230 ; 231) de présence d'un objet transporté sur le convoyeur (2), qui sont espacés l'un de l'autre dans la direction de convoyage et sont proches l'un de l'autre et qui de préférence sont symétriques l'un de l'autre par rapport au centre (C) de la zone de convoyage(Z1 ; Z2), et un contrôleur (4) qui est adapté pour commander le convoyeur (2) à partir de chaque signal électrique de détection délivré par chaque détecteur.

13. Module de convoyage selon l'une quelconque des revendications 1 à 12, dans lequel le convoyeur (2) comporte un ensemble de convoyage motorisé comportant plusieurs rouleaux (20) parallèles et espacés dans la direction de convoyage, de préférence dans lequel au moins un (20-Z1 ; 20-Z2) des rouleaux est motorisé et est couplé aux autres rouleaux pour leur entraînement en rotation par un système de transmission (22), de préférence par un système de transmission (22) comportant une courroie de transmission (220).

14. Module de convoyage selon la revendication 13, dans lequel le rouleau moteur (20-Z1 ; 20-Z2) est positionné au voisinage du centre (C) de l'ensemble de rouleaux auxquels il est couplé.

15. Ligne de convoyage comportant plusieurs modules de convoyage selon l'une quelconque des revendications 1 à 14, dont les bus électriques sont interconnectés.

## Patentansprüche

1. Fördermodul (1), welches mindestens einen Förderer (2) aufweist, der geeignet ist, mindestens eine Last zwischen einer ersten Seite (C1) des Förderers und einer zweiten Seite (C2) des Förderers zu transportieren, und eine elektrische Verkabelung (3), die einen elektrischen Bus mit einer Mehrzahl von leitfähigen Leitungen umfasst, die elektrisch voneinander isoliert sind und zumindest zwischen der ersten Seite (C1) und der zweiten Seite (C2) des Förderers verlaufen,
**dadurch gekennzeichnet, dass**
jede leitfähige Leitung an jedem Ende einen elektrischen Zwittersteckverbinder aufweist, und
dass für jede leitfähige Leitung die beiden elektrischen Zwittersteckverbinder einer leitfähigen Leitung identisch sind,
sodass das Fördermodul (1) umkehrbar ist.

2. Fördermodul nach Anspruch 1, wobei der elektrische Bus mindestens einen elektrischen Versorgungsbus (3A) aufweist, der für eine Stromversorgung des Fördermoduls (1) mit einem Wechselstrom, bevorzugt einem dreiphasigen Wechselstrom, und/oder mit einem Gleichstrom ausgelegt ist.

3. Fördermodul nach Anspruch 2, wobei der elektrische Versorgungsbus (3A) ein Stromversorgungskabel aufweist, das mindestens fünf Leiterdrähte (300A bis 304A) für die Stromversorgung des Fördermoduls mit einem dreiphasigen Wechselstrom umfasst, wobei diese Leiterdrähte (300A bis 304A) elektrisch voneinander isoliert sind und zumindest zwischen der ersten Seite (C1) und der zweiten Seite (C2) des Förderers verlaufen, wobei jeder Leiterdraht (300A bis 304A) an jedem Ende einen elektrischen Zwittersteckverbinder (310A bis 314A) aufweist und für jeden Leiterdraht (300A bis 304A) die beiden elektrischen Zwittersteckverbinder eines Leiterdrahts identisch sind.

4. Fördermodul nach Anspruch 2 oder 3, wobei der elektrische Versorgungsbus (3A) ein Stromversorgungskabel aufweist, das mindestens zwei Leiterdrähte (305A; 306A) für die Stromversorgung des Fördermoduls (1) mit einem Gleichstrom umfasst, wobei diese Leiterdrähte (305A; 306A) elektrisch voneinander isoliert sind und zumindest zwischen der ersten Seite (C1) und der zweiten Seite (C2) des Förderers verlaufen, wobei jeder Leiterdraht (305A; 306A) an jedem Ende einen elektrischen Zwittersteckverbinder (315A; 316A) aufweist und für jeden Leiterdraht die beiden elektrischen Zwittersteckverbinder eines Leiterdrahts identisch sind.

5. Modul nach einem der Ansprüche 2 bis 4, wobei alle Zwittersteckverbinder des elektrischen Versorgungsbusses (3A) identisch sind.

6. Fördermodul nach einem der Ansprüche 2 bis 5, welches mindestens eine Abzweigung (32) aufweist, die mehrere leitfähige Leitungen des elektrischen Versorgungsbusses (3A) elektrisch mit einem oder mehreren Stellelementen des Förderers verbindet, und bevorzugt mit einem oder mehreren Elektromotoren (M) des Förderers (2), wobei die Abzweigung (32) bevorzugt eine Vampirklemme (320) aufweist.

7. Fördermodul nach einem der Ansprüche 2 bis 6, welches eine Steuerung (4) aufweist, die zur Steuerung des Förderers (2) ausgelegt ist, und wobei mindestens zwei leitfähige Leitungen des elektrischen Versorgungsbusses (3A) durch eine Abzweigung (33) mit der Steuerung (4) verbunden sind, um diese mit elektrischem Strom zu versorgen, und wobei die Abzweigung (33) bevorzugt eine Vampirklemme (330) aufweist.

8. Fördermodul nach einem der Ansprüche 1 bis 7, welches eine Steuerung (4) aufweist, die zur Steuerung des Förderers (2) ausgelegt ist, und wobei der elektrische Bus einen Kommunikationsbus (3B) aufweist, der zumindest zwischen der ersten Seite (C1) und der zweiten Seite (C2) des Förderers (2) verläuft und an jedem Ende einen elektrischen Zwittersteckverbinder (310B) aufweist, wobei die beiden elektrischen Zwittersteckverbinder (310B) des Kommunikationsbusses (3B) identisch sind, und die Steuerung (4) mit dem Kommunikationsbus (3B) verbunden ist, wobei der Kommunikationsbus (3B) bevorzugt ein Netzwerkbus vom Ethernet-Typ ist.

9. Fördermodul nach Anspruch 8, wobei der Kommunikationsbus (3B) ein erstes Netzwerkkabel (30B) aufweist, dessen eines Ende mit einem der elektrischen Zwittersteckverbinder (310B) versehen ist und dessen anderes Ende mit der Steuerung (4) verbunden ist, und ein zweites Netzwerkkabel (30B), dessen eines Ende mit dem anderen elektrischen Zwittersteckverbinder (310B) versehen ist und dessen anderes Ende mit der Steuerung (4) verbunden ist.

10. Fördermodul nach einem der Ansprüche 1 bis 8, wobei der elektrische Bus einen Sicherheitsbus (3C) für Notstopp aufweist, der mehrere leitfähige Leitungen (L1 bis L6) umfasst, die elektrisch voneinander isoliert sind und zumindest zwischen der ersten Seite (C1) und der zweiten Seite (C2) verlaufen, wobei jede leitfähige Leitung (L1 bis L6) an jedem Ende einen elektrischen Zwittersteckverbinder (310C) aufweist und für jede leitfähige Leitung (L1 bis L6) die beiden elektrischen Zwittersteckverbinder (310C) einer leitfähigen Leitung identisch sind, und das Fördermodul bevorzugt ein manuelles Notstopp-Stellelement (24) aufweist, das elektrisch mit mindestens einem Teil (L3 bis L6) der leitfähigen Leitungen verbunden ist.

11. Fördermodul nach einem der Ansprüche 1 bis 10, wobei der Förderer (2) eine bidirektionale Motorisierung aufweist und das Fördermodul eine Steuerung (4) aufweist, die dazu ausgelegt ist, den Förderer (2) in einer ersten Förderrichtung (X1) von der ersten Seite (C1) des Förderers zu der zweiten Seite (C2) des Förderers oder in einer entgegengesetzten Förderrichtung (X2) von der zweiten Seite (C2) des Förderers zu der ersten Seite (C1) des Förderers zu steuern.

12. Fördermodul nach einem der Ansprüche 1 bis 11, welches mindestens eine Förderzone (Z1; Z2) aufweist und für jede Förderzone (Z1; Z2) zwei Detektoren (230; 231) für die Anwesenheit eines auf dem Förderer (2) transportierten Objekts aufweist, die in der Förderrichtung voneinander beabstandet und nahe beieinander sind, und die bevorzugt symmetrisch zueinander in Bezug auf das Zentrum (C) der Förderzone (Z1; Z2) angeordnet sind, und eine Steuerung (4), die dazu ausgelegt ist, den Förderer (2) basierend auf jedem von jedem Detektor gelieferten elektrischen Erkennungssignal zu steuern.

13. Fördermodul nach einem der Ansprüche 1 bis 12, wobei der Förderer (2) eine motorisierte Fördereinheit aufweist, die mehrere parallele und in Förderrichtung beabstandete Rollen (20) umfasst, wobei bevorzugt mindestens eine (20-Z1; 20-Z2) der Rollen motorisiert ist und mit den anderen Rollen für deren Rotationsantrieb durch ein Übertragungssystem (22) gekoppelt ist, bevorzugt durch ein Übertragungssystem (22), das einen Übertragungsriemen (220) aufweist.

14. Fördermodul nach Anspruch 13, wobei die motorisierte Rolle (20-Z1; 20-Z2) in der Nähe des Zentrums (C) der Rolleneinheit positioniert ist, mit der sie gekoppelt ist.

15. Förderlinie, welche mehrere Fördermodule nach einem der Ansprüche 1 bis 14 aufweist, wobei deren elektrische Busse miteinander verbunden sind.

## Claims

1. Conveying module (1) comprising at least one conveyor (2), which is suitable for conveying at least one load between a first side (C1) of the conveyor and a second side (C2) of the conveyor, and electrical wiring (3) which comprises an electrical bus comprising a plurality of conductor lines, which are electrically insulated from one another and which extend at least between the first side (C1) and the second side (C2) of the conveyor, **characterized in that** each conductor line comprises a hermaphroditic electrical connector at each end, and **in that** for each conductor line, the two hermaphroditic electrical connectors of a conductor line are identical, such that the conveying module (1) is reversible.

2. Conveying module according to claim 1, wherein the electrical bus comprises at least one power supply bus (3A) suitable for supplying the conveying module (1) with alternating current, preferably three-phase alternating current and/or direct current.

3. Conveying module according to claim 2, wherein the power supply bus (3A) comprises a power supply cable including at least five conductor wires (300A to 304A) for supplying the conveying module with three-phase alternating current, which conductor wires (300A to 304A) are electrically insulated from one another and extend at least between the first side (C1) and the second side (C2) of the conveyor, each conductor wire (300A to 304A) comprising a hermaphroditic electrical connector (310A to 314A) at each end and for each conductor wire (300A to 304A), the two hermaphroditic electrical connectors of a conductor wire being identical.

4. Conveying module according to claim 2 or 3, wherein the power supply bus (3A) comprises a power supply cable including at least two conductor wires (305A; 306A) for supplying the conveying module (1) with direct current, which conductor wires (305A; 306A) are electrically insulated from one another and extend at least between the first side (C1) and the second side (C2) of the conveyor, each conductor wire (305A; 306A) comprising a hermaphroditic electrical connector (315A; 316A) at each end and for each conductor wire, the two hermaphroditic electrical connectors of a conductor wire being identical.

5. Module according to any of claims 2 to 4, wherein all hermaphroditic connectors of the power supply bus (3A) are identical.

6. Conveying module according to any of claims 2 to 5, comprising at least one branch (32) which electrically connects a plurality of conductor lines of the power supply bus (3A) to one or more actuators of the conveyor, and preferably to one or more electric motors (M) of the conveyor (2), and preferably wherein the branch (32) comprises a vampire plug (320).

7. Conveying module according to any of claims 2 to 6, comprising a controller (4) which is suitable for controlling the conveyor (2) and wherein at least two conductor lines of the power supply bus (3A) are connected via a branch (33) to the controller (4), in order to supply it with electric current, and preferably wherein the branch (33) comprises a vampire plug (330).

8. Conveying module according to any of claims 1 to 7, which comprises a controller (4) which is suitable for controlling the conveyor (2), and wherein the electrical bus comprises a communication bus (3B) which extends at least between the first side (C1) and the second side (C2) of the conveyor (2), and which comprises a hermaphroditic electrical connector (310B) at each end, the two hermaphroditic electrical connectors (310B) of the communication bus (3B) being identical, and the controller (4) being connected to the communication bus (3B), the communication bus (3B) preferably being an Ethernet-type network bus.

9. Conveying module according to claim 8, wherein the communication bus (3B) comprises a first network cable (30B) of which one end is provided with one of the hermaphroditic electrical connectors (310B) and of which the other end is connected to the controller (4), and a second network cable (30B) of which one end is provided with the other hermaphroditic electrical connector (310B) and of which the other end is connected to the controller (4).

10. Conveying module according to any of claims 1 to 8, wherein the electrical bus comprises an emergency stop safety bus (3C) comprising a plurality of conductor lines (L1 to L6) which are electrically insulated from one another and extend at least between the first side (C1) and the second side (C2), each conductor line (L1 to L6) comprising at each end a hermaphroditic electrical connector (310C) and for each conductor line (L1 to L6), the two hermaphroditic electrical connectors (310C) of a conductor line being identical, and the conveying module preferably comprising a manual emergency stop actuator (24) electrically connected to at least part (L3 to L6) of the conductor lines.

11. Conveying module according to any of claims 1 to 10, wherein the conveyor (2) comprises bidirectional motorization and the conveying module comprises a controller (4) which is suitable for controlling the conveyor (2) in a first conveying direction (X1) from the first conveyor side (C1) to the second conveyor side (C2) or in an opposite conveying direction (X2) from the second conveyor side (C2) to the first conveyor side (C1).

12. Conveying module according to any of claims 1 to 11, comprising at least one conveying zone (Z1; Z2) and comprising, for each conveying zone (Z1; Z2), two detectors (230; 231) for detecting the presence of an object conveyed on the conveyor (2), which are spaced apart in the conveying direction and are close to each other and which preferably are symmetrical to each other with respect to the center (C) of the conveying zone (Z1; Z2), and a controller (4) which is suitable for controlling the conveyor (2) on the basis of each electrical detection signal output by each detector.

13. Conveying module according to any of claims 1 to 12, wherein the conveyor (2) comprises a motor-driven conveying assembly comprising a plurality of rollers (20) which are parallel and spaced apart in the conveying direction, preferably wherein at least one (20-Z1; 20-Z2) of the rollers is motor-driven and is coupled to the other rollers so as to be rotationally driven by a transmission system (22), preferably by a transmission system (22) comprising a transmission belt (220).

14. Conveying module according to claim 13, wherein the drive roller (20-Z1; 20-Z2) is positioned in the vicinity of the center (C) of the assembly of rollers to which it is coupled.

15. Conveying line comprising a plurality of conveying modules according to any of claims 1 to 14, the electrical buses of which conveying line are interconnected.
